# FASCICULE DE BREVET EUROPEEN

(11) **EP 3 300 221 B1**
(45) Date de publication et mention de la délivrance du brevet: **20.01.2021**
(21) Numéro de dépôt: 17188446.3
(22) Date de dépôt: 29.08.2017
(51) Int. Cl.: H02K 5/24, H02K 5/16, H02K 7/118, H02K 5/173, H02K 5/167, H02K 7/00, F02N 15/00, F02N 11/00, F02N 15/06

(54) **DÉMARREUR MUNI D'UN CAPOT ET D'UN ORGANE DE FROTTEMENT**
ANLASSER, DER MIT EINER ABDECKUNG UND EINEM REIBUNGSORGAN AUSGESTATTET IST
STARTER PROVIDED WITH A COVER AND A FRICTION MEMBER

(30) Priorité: 22.09.2016 FR 1658927
(43) Date de publication de la demande: 28.03.2018
(73) Titulaire: VALEO EQUIPEMENTS ELECTRIQUES MOTEUR, 94046 Créteil Cedex (FR)
(72) Inventeur: GUILLEMOT, Xavier, 38070 St Quentin Fallavier (FR)
(74) Mandataire: Prigent, Pierre

(56) Documents cités:
- DE-A1- 3 131 148
- DE-A1-102011 084 234
- DE-A1-102012 205 519
- DE-A1-102014 217 129
- US-A1- 2002 183 122

## Description

### DOMAINE TECHNIQUE DE L'INVENTION

La présente invention porte sur un démarreur pour véhicule automobile comprenant un capot, un moteur électrique muni d'un rotor ayant un arbre et au moins un organe de frottement.

### ARRIERE PLAN TECHNOLOGIQUE

Les véhicules automobiles comportant un moteur thermique comportent également un dispositif de démarrage de ce moteur thermique, appelé démarreur.

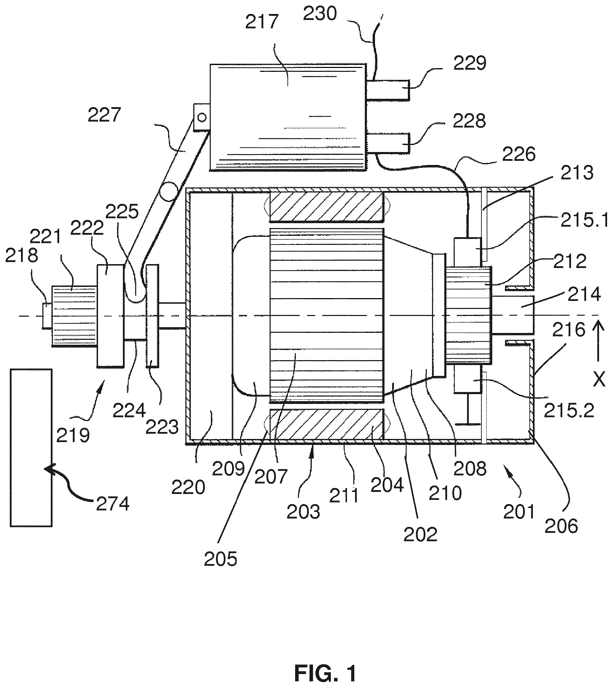

On a représenté sur la figure 1 un démarreur 201 pour un moteur à combustion interne de véhicule automobile selon l'état de la technique.

Ce démarreur 201 comprend un contacteur 217 et un moteur électrique 206 muni d'une part d'un rotor 202, encore appelé induit, comprenant un axe X et pouvant tourner autour de cet axe, et d'autre part, d'un stator 211, encore appelé inducteur, placé autour du rotor 202. Ce stator 211 est logé dans une culasse 203 du démarreur et comprend plusieurs pièces polaires 204 pour la mise en place d'un bobinage inducteur 205.

Le rotor 202 comporte un corps de rotor 207, un bobinage d'induit 208 enroulé dans des encoches du corps de rotor 207 et un arbre d'induit 214.

Ce bobinage d'induit 208 forme, de part et d'autre du corps de rotor 207, un chignon avant 209 et un chignon arrière 210.

Le rotor 202 est pourvu, à l'arrière, d'un collecteur 212 supporté par l'arbre d'induit 214 comprenant une pluralité de pièces de contact connectées électriquement aux éléments conducteurs, formés dans l'exemple considéré par des fils, du bobinage d'induit 208. Le collecteur 212 du moteur électrique 206 est entouré par la culasse 203.

Des balais 215.1 - 215.4 dont seulement deux à savoir 215.1 et 215.2 sont visibles sur la figure 1, sont prévus pour l'alimentation électrique du bobinage d'induit 208. Les balais 215.1 - 215.4 formant un groupe sont portés par un porte balai 213 pris en sandwich entre la culasse 203 et un capot 216. Au moins un des balais du groupe étant relié à la masse du démarreur 201 et au moins un des balais du groupe étant relié au contacteur 217. Il est prévu ici un groupe de 4 balais 215.1 - 215.4. Toutefois, les balais peuvent également être par exemple au nombre de deux, six ou huit.

Le contacteur 217 comprend une borne 229 reliée via un élément de liaison électrique, par exemple un fil 230, à une alimentation électrique du véhicule.

Le contacteur comprend une borne 228 reliée via un élément de liaison électrique, par exemple un fil 226 à au moins un des balais 215.1 - 215.4.

Les balais 215.1 - 215.4 viennent frotter sur le collecteur 212 lorsque le rotor 202 est en rotation.

Le démarreur 201 comporte en outre un lanceur 219 monté de manière coulissante sur un arbre d'entraînement 218 et pouvant être entraîné en rotation autour de l'axe X par le rotor 202.

Un ensemble réducteur de vitesses 220 peut être interposé entre le rotor 202 et l'arbre d'entraînement 218.

Le lanceur 219 comporte un élément d'entraînement formé d'un pignon 221 et destiné à s'engager sur un organe d'entraînement 274 du moteur à combustion. Cet organe d'entraînement est par exemple une couronne dentée.

Le lanceur 219 comprend également un porte-pignon qui n'est pas visible sur la figure 1. Le pignon 221 est monté coulissant sur ce porte-pignon.

Le lanceur 219 comprend en outre une roue libre 222 et une rondelle poulie 223 définissant entre elles une gorge 224 pour recevoir l'extrémité 225 d'une fourchette 227.

Cette fourchette 227 est réalisée par exemple par moulage d'une matière plastique.

La fourchette 227 est actionnée par le contacteur 217 pour translater le lanceur 219 par rapport à l'arbre d'entraînement 218, suivant l'axe X, entre une première position dans laquelle le lanceur 219 est désengagé de la couronne dentée 274 et une deuxième position dite d'engagement dans laquelle le lanceur 219 entraîne le moteur à combustion par l'intermédiaire du pignon 221.

Pour que le pignon 221 puisse entrainer la couronne dentée du moteur thermique 274, les dents du pignon doivent après translation du pignon et du lanceur suivant l'axe X atteindre la position d'engagement. Selon cette position d'engagement une dent du pignon est disposée entre deux dents de la couronne.

Le pignon 221 entraîne alors la couronne 274 dans un sens appelé sens positif ce qui a pour effet de provoquer lorsque le pignon 221 tourne à une certaine vitesse, le démarrage du moteur thermique.

Après le démarrage du moteur thermique, la couronne 274 poursuit sa rotation dans ledit sens positif. Elle entraine alors le pignon mais pas le rotor 202 grâce à la roue libre 222.

En effet, la roue libre 222 est disposée entre le rotor 202 et le pignon 221 pour permettre une transmission du couple du rotor 202 vers le pignon 221 et la couronne 274 lorsque celle-ci est entrainée dans le sens positif par le pignon. Au contraire, lorsque la couronne 274 tourne dans le sens positif et entraine le pignon 221, le rotor 202 n'est pas entrainé.

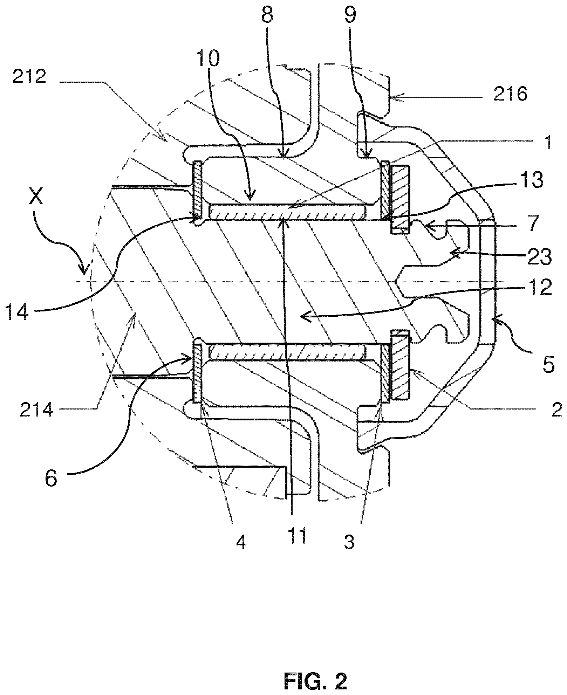

La figure 2 est une vue détaillée d'une partie du démarreur 201 illustré sur la figure 1 et qui représente notamment une portion 12 de l'arbre 214, le capot 216 et le collecteur 212. Dans la figure 2, on définit l'avant du démarreur comme le côté du démarreur comprenant le pignon destiné à être engrené avec la couronne du moteur thermique et l'arrière comme le côté du démarreur opposé au côté avant, le côté arrière comprenant notamment le capot.

L'arbre 214 est l'arbre du rotor 202, le rotor 202 étant muni d'un axe X. L'arbre 214 s'étend selon l'axe X de sorte que l'axe X est également l'axe de l'arbre 214.

Sur la figure 2, on peut voir:
- une portion 12 de l'arbre 214. La portion 12 est reçue par le capot 216. Plus précisément la portion 12 de l'arbre 214 traverse le capot 216 de part en part de sorte que la portion de l'arbre comprend une extrémité d'arbre 23 qui se trouve de l'autre côté du capot 216 par rapport au reste de la portion d'arbre. Par exemple, l'arbre comprend un épaulement 6 et la portion 12 de l'arbre 214 est définie comme la partie de l'arbre 214 se situant en arrière par rapport à l'épaulement 6. Par ailleurs, cette portion 12 de l'arbre 214 comprend une périphérie externe 11 ;
- un capot 216 réalisé par exemple en alliage ou en aluminium. Ce capot a un côté interne 8 qui est en vis à vis du collecteur 212 et un côté externe 9. Le côté externe est situé de l'autre côté du côté interne. Par exemple, le côté externe est situé du côté de l'extrémité 23 de la portion 12 d'arbre. Le capot comprend en outre une ouverture 10 traversant du côté interne 8 au côté externe 9 et la portion 12 de l'arbre traverse le capot 216 par le biais de cette ouverture 10;
- un organe de butée 2 monté sur l'arbre 214 du côté externe 9 du capot 216. Par exemple, l'organe de butée est un circlips ou une bague de butée. En tout état de cause, l'organe de butée est reçu dans un aménagement de l'arbre pour y être fixé, l'aménagement étant par exemple délimité par une saillie 7. Ainsi, l'organe de butée est entrainé en rotation avec l'arbre;
- un palier 1 entre le capot 216 et la portion 12 de l'arbre 214. Le palier 1 permet que l'arbre 214 puisse tourner par rapport au capot 216. Le palier est par exemple une douille à aiguilles, un coussinet ou un roulement à billes ou à rouleaux.
- un premier organe 3 de frottement comprenant une ouverture 13. Le premier organe de frottement est par exemple une rondelle et est monté entre l'organe de butée 2 et le capot 216, la portion 12 de l'arbre 214 traversant cette ouverture 13.
- un deuxième organe de frottement 4 comprenant une ouverture 14. Le deuxième organe de frottement est par exemple une rondelle et est monté entre le collecteur 212 et le capot 216, la portion 12 de l'arbre 214 traversant cette ouverture 14.

Ces deux rondelles présentent une dureté supérieure à la dureté du capot pour qu'elles puissent frotter sur des pièces en rotation alors qu'elles sont fixes ou au contraire pour qu'elles frottent sur des pièces fixes alors qu'elles sont en rotation par exemple entrainées par la portion 12 de l'arbre 214.

Par exemple, on peut prévoir que l'extrémité 23 de l'arbre 214 est couverte d'un capuchon 5 reçu dans le capot 216.

Cette machine donne satisfaction néanmoins il peut être souhaitable d'améliorer encore celle-ci. En effet, lors du fonctionnement du démarreur celui-ci émet des bruits assez importants qui sont notamment dus aux frottements des rondelles sur le capot et sur l'arbre. De plus, de ce frottement résulte une abrasion du capot et l'émission de particules qui peuvent entrer dans le palier et le détériorer. Par ailleurs, un tel assemblage est très sensible aux défauts notamment de géométrie de la rondelle qui entrainent des bruits encore plus importants et des vibrations.

Il est également connu du document DE 10 2011 084234 A1 une structure similaire a l'exemple décrit précédemment.

Il existe donc un besoin pour un démarreur émettant des bruits réduits et ayant une durabilité améliorée.

### OBJET DE L'INVENTION

L'invention a pour objet de répondre à ce besoin tout en remédiant à au moins un de ces inconvénients précités.

Suivant l'invention il est proposé un démarreur comprenant:
- un rotor ayant un collecteur et un arbre muni d'un axe;
- un capot ayant un côté interne en vis à vis du collecteur et un côté externe de l'autre côté du côté interne, le capot comprenant une ouverture traversant du côté interne au côté externe, une portion de l'arbre traversant le capot par le biais de l'ouverture;
- un organe de butée monté sur l'arbre du côté externe du capot; et
- un premier organe de frottement comprenant une ouverture et monté entre l'organe de butée et le capot, la portion de l'arbre traversant cette ouverture,

Le premier organe de frottement est centré sur le capot.

Le capot comprend une portion de support s'étendant axialement pour supporter le premier organe de frottement.

La portion de support permet le centrage du premier organe de frottement.

Selon une caractéristique générale de l'invention, le capot supporte le premier organe de frottement de sorte que le premier organe de frottement présente un premier jeu minimum positif entre la périphérie interne de son ouverture et la périphérie externe de la portion de l'arbre. Ainsi, le capot n'est pas en contact direct avec l'organe de butée mais par le biais de l'organe de frottement.

Le premier organe de frottement est par exemple une rondelle. Le premier jeu minimum positif est au minimum positif et permet qu'il y ait une distance non nulle entre la périphérie interne de l'ouverture du premier organe de frottement et la périphérie externe de l'arbre. Le jeu minimum positif permet donc de dissocier l'organe de frottement de la portion de l'arbre tournant, de sorte que l'organe de frottement ne soit pas entrainé en rotation par l'arbre. On réduit ainsi le problème d'abrasion du capot et des bruits dus aux frottements.

Lors du fonctionnement du démarreur, l'arbre peut être déplacé axialement par exemple de l'avant du démarreur vers l'arrière du démarreur, cela entraîne notamment que le premier organe de frottement 3 de l'art antérieur monté entre l'organe de butée et le capot n'est alors plus maintenu contre le capot et a donc tendance à tomber pour entrer en contact avec la portion 12 d'arbre 214. La fonction de support du capot de l'organe de frottement permet donc par l'introduction d'un premier jeu minimum positif d'éviter le contact entre l'arbre et l'organe de frottement.

Le premier organe de frottement peut frotter contre une surface de l'organe de butée lorsque la surface de l'organe de butée est en rotation. Ainsi, l'organe de frottement a pour but de limiter l'usure du capot. En effet sans cet organe de frottement le capot s'userait en contact contre l'organe de butée.

Selon d'autres caractéristiques prises isolément ou en combinaison :
- l'organe de frottement est monté radialement entre l'arbre et le capot.
- la surface de l'organe de butée en contact avec l'organe de frottement est supérieure à la surface de l'organe de butée en contact avec l'arbre.
- l'organe de butée est entrainé en rotation avec l'arbre. Cela permet que le frottement se fasse entre l'organe de butée et l'organe de frottement et non entre la butée et l'arbre. Ainsi l'usure de l'arbre est ralentie et donc l'augmentation des jeux due à l'usure des pièces entre l'organe de butée et le capot est ralentie.
- le démarreur comprend un palier entre le capot et la portion de l'arbre, et le premier jeu minimum positif est supérieur à la somme d'un jeu entre le palier et le capot et d'un jeu entre le palier et la portion de l'arbre.

Le palier est par exemple une douille à aiguilles, un coussinet ou un roulement à billes ou à rouleaux. Ainsi, en tenant compte du jeu et de la localisation du palier par rapport au capot d'une part et du jeu entre le palier et la portion d'arbre d'autre part, on tend à éviter dans tous les cas y compris quand il y a des déplacements radiaux relatifs de l'arbre et du capot par rapport au palier que l'organe de frottement puisse toucher la portion d'arbre et soit alors entrainé en rotation.
- le premier organe de frottement est fixé sur le capot.

En fixant l'organe de frottement par exemple à l'aide de colle, on évite que l'organe de frottement soit entrainé par la portion d'arbre et on supprime tout risque d'abrasion du capot par l'organe de frottement. De plus, à l'aide du jeu positif, on supprime les frottements de la périphérie interne de l'ouverture de l'organe de frottement sur la portion d'arbre ce qui pourrait le ralentir, diminuer les performances du démarreur, augmenter la bruyance du démarreur ainsi que provoquer réchauffement par frottement de la partie arrière du démarreur.
- le premier organe de frottement est centré sur le capot.

En centrant le premier organe de frottement sur le capot, on obtient un jeu équilibré sur tout le pourtour de l'ouverture de l'organe de frottement.

On évite ainsi que pour avoir le premier jeu minimum positif sur tout le pourtour de l'ouverture du premier organe de frottement, une réduction importante de la surface de cet organe de frottement soit nécessaire sur certains secteurs angulaires de l'organe de frottement.
- le capot comprend une portion de support s'étendant axialement pour supporter le premier organe de frottement.

Par exemple, cette portion s'étend axialement à partir du côté externe du capot. En tout état de cause, cette portion de support permet de supporter l'organe de frottement en exerçant notamment une force de réaction à sa pesanteur. Cette portion de support empêche l'organe de frottement de retomber sur la portion d'arbre, quelque soit la position axiale de la portion d'arbre et de son organe de butée par rapport au capot.
- la portion de support permet le centrage du premier organe de frottement.

La portion de support peut alors en plus du support permettre le centrage de l'organe de frottement. On peut prévoir que la portion de support exerce une force de maintien qui canalise l'organe de frottement pour éviter qu'il ne se déplace notamment vers le haut. Par exemple, la portion de support permet que seul soit possible un déplacement axial ou une rotation de la portion d'arbre par rapport à la portion de support.
- la portion de support centre une périphérie externe du premier organe de frottement.

De manière alternative, on pourrait prévoir que la portion de support centre une périphérie interne de l'organe de frottement, la périphérie interne de l'organe de frottement correspondant à la périphérie interne de l'ouverture de l'organe de frottement.

En tout état de cause, la portion de support peut par exemple s'étendre sur 360° autour de l'axe.
- le premier organe de frottement a une épaisseur axiale supérieure à une distance entre le capot et l'organe de butée.

On réduit ainsi le risque de déplacement radial du premier organe de frottement vers l'extérieur de sorte qu'il puisse reste confiné avec le jeu minimum positif autour de la portion d'arbre.
- le démarreur comprend un deuxième organe de frottement, ledit deuxième organe de frottement comprenant une ouverture et la portion de l'arbre traverse cette ouverture, le deuxième organe de frottement étant monté entre le collecteur et le capot. De plus, le capot supporte le deuxième organe de frottement de sorte que le deuxième organe de frottement présente un deuxième jeu minimum positif entre la périphérie interne de son ouverture et la périphérie externe de la portion de l'arbre. Ainsi, le capot n'est pas en contact direct avec le collecteur mais par le biais de l'organe de frottement.

Le deuxième organe de frottement est par exemple une rondelle. Le deuxième jeu minimum positif est au minimum positif et permet qu'il y ait une distance non nulle entre la périphérie interne de l'ouverture du deuxième organe de frottement et la périphérie externe de l'arbre. Le jeu minimum positif permet donc de dissocier l'organe de frottement de la portion de l'arbre tournant, de sorte que l'organe de frottement ne soit pas entrainé en rotation par l'arbre. On réduit ainsi le problème d'abrasion du capot et des bruits dus aux frottements.

Lors du fonctionnement du démarreur, l'arbre peut être déplacé axialement par exemple de l'avant du démarreur vers l'arrière du démarreur, cela entraîne notamment que le deuxième organe de frottement 4 est tiré du montage entre le collecteur et le capot de sorte qu'il puisse entrer en contact avec la portion 12 d'arbre 214. La fonction de support du capot permet là aussi par l'introduction d'un deuxième jeu minimum positif d'éviter le contact entre l'arbre et l'organe de frottement.
- le deuxième jeu minimum positif est supérieur à la somme d'un jeu entre le palier et le capot et d'un jeu entre le palier et la portion de l'arbre.

Ainsi, en tenant compte du jeu et de la localisation du palier par rapport au capot d'une part et du jeu entre le palier et la portion d'arbre d'autre part, on évite dans tous les cas y compris quand il y a des déplacements radiaux relatifs de l'arbre et du capot par rapport au palier que l'organe de frottement puisse toucher la portion d'arbre et soit alors entrainé en rotation.
- le deuxième organe de frottement est fixé sur le capot.

En fixant l'organe de frottement par exemple à l'aide de colle, on évite que l'organe de frottement soit entrainé par la portion d'arbre et on supprime tout risque d'abrasion du capot par l'organe de frottement. De plus, à l'aide du jeu positif, on supprime les frottements de la périphérie interne de l'ouverture de l'organe de frottement sur la portion d'arbre ce qui pourrait le ralentir, diminuer les performances du démarreur, augmenter la bruyance du démarreur ainsi que provoquer réchauffement par frottement de la partie arrière du démarreur.
- le deuxième organe de frottement est centré sur le capot.

En centrant le deuxième organe de frottement sur le capot, on obtient un jeu équilibré sur tout le pourtour de l'ouverture de l'organe de frottement.

On évite ainsi que pour avoir le deuxième jeu minimum positif sur le tout le pourtour de l'ouverture du deuxième organe de frottement, une réduction importante de la surface de cet organe de frottement soit nécessaire sur certains secteurs angulaires de l'organe de frottement.
- le capot comprend une portion interne de support s'étendant axialement à partir du côté interne pour supporter le deuxième organe de frottement.

Cette portion interne de support permet de supporter l'organe de frottement en exerçant notamment une force de réaction à sa pesanteur. Cette portion interne de support empêche l'organe de frottement de retomber sur la portion d'arbre, quelque soit la position axiale de la portion d'arbre et de son organe de butée par rapport au capot.
- la portion interne de support permet le centrage du deuxième organe de frottement.

La portion interne de support peut alors en plus du support permettre le centrage de l'organe de frottement. Par exemple, on peut prévoir que la portion interne de support exerce une force de maintien qui canalise l'organe de frottement pour éviter qu'il ne se déplace notamment vers le haut. Par exemple, la portion interne de support permet que seul soit possible un déplacement axial ou une rotation de la portion d'arbre par rapport à la portion interne de support.

Par exemple, on pourrait prévoir que la portion interne de support centre une périphérie externe de l'organe de frottement.

De manière alternative, la portion interne de support centre une périphérie interne de l'organe de frottement, la périphérie interne de l'organe de frottement correspondant à la périphérie interne de l'ouverture de l'organe de frottement.

En tout état de cause, la portion de support peut par exemple s'étendre sur 360° autour de l'axe.
- le deuxième organe de frottement a une épaisseur axiale supérieure à une distance entre le collecteur et le capot.

On réduit ainsi le risque de déplacement radial du deuxième organe de frottement vers l'extérieur de sorte qu'il puisse reste confiné avec le jeu minimum positif autour de la portion d'arbre.

### BREVE DESCRIPTION DES FIGURES

D'autres caractéristiques et avantages de l'invention apparaîtront à l'examen de la description détaillée de modes de mise en œuvre et de réalisation, nullement limitatifs, et des dessins annexés sur lesquels :
- la figure 1, déjà décrite, représente une coupe d'un démarreur selon l'état de la technique ;
- la figure 2, déjà décrite, est une vue détaillée représentant notamment un capot selon l'état de la technique ; et
- la figure 3 est une vue détaillée représentant notamment un capot selon un mode de réalisation de l'invention ;

Les éléments identiques, similaires, ou analogues conservent la même référence d'une figure à l'autre.

### DESCRIPTION D'EXEMPLES DE REALISATION DE L'INVENTION

Dans la suite de la description on définit l'avant du démarreur comme le côté du démarreur comprenant le pignon destiné à être engrené avec la couronne du moteur thermique et l'arrière comme le côté du démarreur opposé au côté avant, le côté arrière comprenant notamment le capot.

De même, les directions radiales et axiales utilisées dans la description ci-dessous sont données en référence à l'axe X, la direction axiale s'étendant selon l'axe X et la direction radiale s'étendant à partir de l'axe X et dans le plan perpendiculaire à l'axe X.

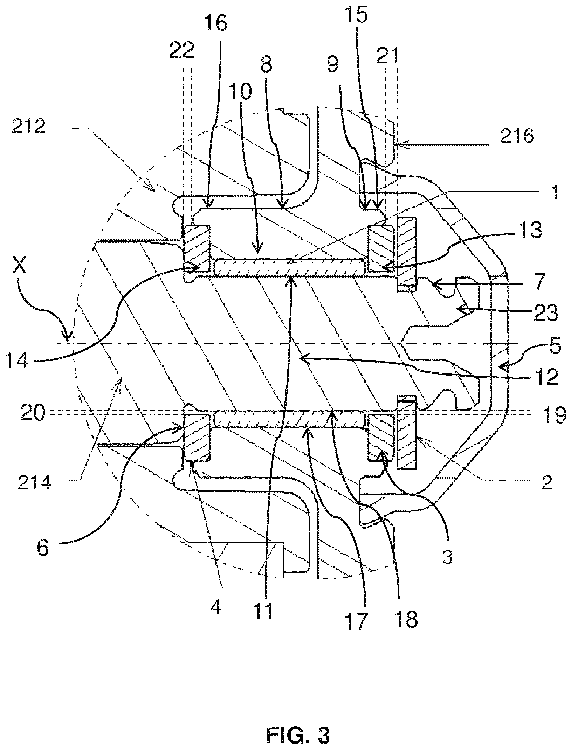

La figure 3 est une vue détaillée qui représente notamment une portion 12 de l'arbre 214, le capot 216 et le collecteur 212.

Le mode de réalisation de l'invention illustré sur la figure 3 se distingue de l'état de la technique illustré sur la figure 2 notamment en ce que le capot 216 supporte le premier organe de frottement 3. Ainsi, le premier organe de frottement 3 présente un premier jeu minimum positif 19 entre la périphérie interne de son ouverture 13 et la périphérie externe 11 de la portion 12 de l'arbre 214. Comme on peut le voir sur la figure 3, le premier jeu minimum positif 19 est illustré par deux droites parallèles en pointillées, une en provenance de la périphérie interne de l'ouverture 13 et une autre en provenance de la périphérie externe 11 de la portion 12.

De même, selon le mode de réalisation illustré sur la figure 3, le capot 216 supporte le deuxième organe de frottement 4. Ainsi, le deuxième organe de frottement 4 présente un deuxième jeu minimum positif 20 entre la périphérie interne de son ouverture 14 et la périphérie externe 11 de la portion 12 de l'arbre 214. Comme on peut le voir sur la figure 3, le deuxième jeu minimum positif 20 est illustré par deux droites parallèles en pointillées, une en provenance de la périphérie interne de l'ouverture 14 et une autre en provenance de la périphérie externe 11 de la portion 12.

Par exemple, on peut prévoir que le premier jeu minimum positif 19 et/ou le deuxième jeu minimum positif 20 est supérieur à la somme d'un jeu 17 entre le palier et le capot et d'un jeu 18 entre le palier et la portion 12 de l'arbre 214.

Pour réaliser cela on peut prévoir que le premier organe de frottement 3 est fixé sur le capot 216. On peut également prévoir que le deuxième organe de frottement 4 est fixé sur le capot 216. Ces fixations peuvent être réalisées par exemple à l'aide de colle ou d'un élément de fixation tel qu'un clou, un rivet, une vis.

Afin d'obtenir un jeu équilibré sur tout le pourtour de l'ouverture de l'organe de frottement, on peut prévoir de centrer le premier organe de frottement 3 sur le capot 216. On peut également prévoir de centrer le deuxième organe de frottement 4 sur le capot 216.

De plus, comme illustré sur la figure 3, le capot peut prévoir une portion de support 15 s'étendant axialement pour supporter le premier organe de frottement 3. Cette portion de support 15 peut s'étendre à partir du côté externe 9 du capot 216. Cette portion de support 15 permet de supporter l'organe de frottement 3 en exerçant notamment une force de réaction à sa pesanteur. Cette portion de support empêche le premier organe de frottement de retomber sur la portion d'arbre, quelque soit la position axiale de la portion d'arbre et de son organe de butée par rapport au capot. Par exemple, dans le cas où le capot 216 présente cette portion de support 15 on peut prévoir de ne pas fixer l'organe de frottement 3 sur le capot 216 puisqu'il est supporté à l'aide de la portion de support 15. Toutefois, on pourrait également prévoir en plus de la portion de support 15 permettant notamment une mise en place simple de l'organe de frottement sur le capot, une fixation de l'organe de frottement 3 sur le capot 216.

Cette portion de support 15 peut permettre le centrage du premier organe de frottement 3. Par exemple, on peut prévoir que la portion de support 15 exerce une force de maintien qui canalise l'organe de frottement pour éviter qu'il ne se déplace notamment vers le haut. Par exemple, la portion de support permet que seul soit possible un déplacement axial ou une rotation de la portion d'arbre par rapport à la portion de support.

Selon un premier exemple de réalisation, la portion de support 15 centre une périphérie externe du premier organe de frottement 3.

Selon un deuxième exemple de réalisation, on pourrait prévoir que la portion de support 15 centre une périphérie interne de l'organe de frottement 3, la périphérie interne de l'organe de frottement 3 correspondant à la périphérie interne de l'ouverture 13 de l'organe de frottement 3.

Dans ces deux exemples de réalisation, on pourrait prévoir que la portion de support peut par exemple s'étendre sur 360° autour de l'axe X. Plus précisément, on peut prévoir que selon le premier exemple la portion de support 15 entoure complètement la périphérie externe de l'organe de frottement 3 et que selon le deuxième exemple la portion de support 15 entoure complètement la périphérie interne de l'organe de frottement 3.

De plus, afin de réduire le risque de déplacement radial du premier organe de frottement vers l'extérieur, on peut prévoir que le premier organe de frottement 3 a une épaisseur axiale supérieure à une distance 21 entre le capot et l'organe de butée 2. Par exemple, l'épaisseur axiale du premier organe de frottement 3 est de plusieurs millimètres alors que la distance 21 est de l'ordre du millimètre. Sur la figure 3, la distance 21 est illustrée par deux droites parallèles en pointillées, une en provenance d'une face de l'organe butée 2 et une autre en provenance d'une extrémité axiale de la portion de support 15.

Comme illustré sur la figure 3, le capot 216 peut aussi prévoir une portion interne de support 16 s'étendant axialement à partir du côté interne 8 pour supporter le deuxième organe de frottement 4. Cette portion interne de support 16 permet de supporter le deuxième organe de frottement 4 en exerçant notamment une force de réaction à sa pesanteur. Cette portion interne de support empêche le deuxième organe de frottement de retomber sur la portion d'arbre, quelque soit la position axiale de la portion d'arbre et de son organe de butée par rapport au capot. Par exemple, dans le cas où le capot 216 présente cette portion interne de support 16 on peut prévoir de ne pas fixer l'organe de frottement 4 sur le capot 216 puisqu'il est supporté à l'aide de la portion interne de support 16. Toutefois, on pourrait également prévoir en plus de la portion interne de support 16 permettant notamment une mise en place simple de l'organe de frottement sur le capot 216, une fixation de l'organe de frottement 4 sur le capot 216.

La portion interne de support 16 peut permettre le centrage du deuxième organe de frottement 4. Dans ce cas, on peut prévoir que la portion interne de support 16 exerce une force de maintien qui canalise l'organe de frottement pour éviter qu'il ne se déplace notamment vers le haut. Par exemple, la portion interne de support permet que seul soit possible par rapport à la portion de support un déplacement axial ou une rotation de la portion d'arbre.

Selon un premier exemple de réalisation, la portion interne de support 16 centre une périphérie externe du deuxième organe de frottement 4.

Selon un deuxième exemple de réalisation, on pourrait prévoir que la portion interne de support 16 centre une périphérie interne du deuxième organe de frottement 4, la périphérie interne de l'organe de frottement 4 correspondant à la périphérie interne de l'ouverture 14 de l'organe de frottement 4.

Dans ces deux exemples de réalisation, on pourrait prévoir que la portion de support peut par exemple s'étendre sur 360° autour de l'axe X. Plus précisément, on peut prévoir que selon le premier exemple la portion interne de support 16 entoure complètement la périphérie externe de l'organe de frottement 4 et que selon le deuxième exemple la portion interne de support 16 entoure complètement la périphérie interne de l'organe de frottement 4.

De plus, afin de réduire le risque de déplacement radial du deuxième organe de frottement 4 vers l'extérieur, on peut prévoir que le deuxième organe de frottement 4 a une épaisseur axiale supérieure à une distance 22 entre le capot 216 et le collecteur 212. Par exemple l'épaisseur axiale du deuxième organe de frottement 4 est de plusieurs millimètres alors que la distance 22 est de l'ordre du millimètre. Sur la figure 3, la distance 22 est illustrée par deux droites parallèles en pointillées, une en provenance du collecteur 212 et une autre en provenance d'une extrémité axiale de la portion interne de support 16.

## Revendications

1. Démarreur (201) comprenant:
- un rotor (202) ayant un collecteur (212) et un arbre (214) muni d'un axe (X);
- un capot (216) ayant un côté interne (8) en vis à vis du collecteur (212) et un côté externe (9) de l'autre côté du côté interne (8), le capot (216) comprenant une ouverture (10) traversant du côté interne (8) au côté externe (9), une portion (12) de l'arbre (214) traversant le capot (216) par le biais de l'ouverture (10);
- un organe de butée (2) monté sur l'arbre (214) du côté externe (9) du capot (216); et
- un premier organe (3) de frottement comprenant une ouverture (13) et monté entre l'organe de butée (2) et le capot (216), la portion de l'arbre (214) traversant cette ouverture (13),
le capot (216) supportant le premier organe de frottement (3) de sorte que le premier organe de frottement présente un premier jeu minimum positif (19) entre la périphérie interne de son ouverture (13) et la périphérie externe (11) de la portion (12) de l'arbre (214), **caractérisé en ce que** le premier organe de frottement (3) est centré sur le capot (216), **en ce que** le capot (216) comprend une portion de support (15) s'étendant axialement pour supporter le premier organe de frottement (3) et permettant le centrage du premier organe de frottement (3).

2. Démarreur selon la revendication précédente, **caractérisé en ce qu'**il comprend un palier (1) entre le capot (216) et la portion (12) de l'arbre (214), et **en ce que** le premier jeu minimum positif (19) est supérieur à la somme d'un jeu (17) entre le palier et le capot et d'un jeu (18) entre le palier et la portion (12) de l'arbre (214).

3. Démarreur (201) selon la revendication 1 ou 2, **caractérisé en ce que** le premier organe de frottement (3) est fixé sur le capot (216).

4. Démarreur (201) selon l'une quelconque des revendications précédentes, **caractérisé en ce que** la portion de support (15) centre une périphérie externe du premier organe de frottement (3).

5. Démarreur (201) selon l'une quelconque des revendications précédentes, **caractérisé en ce que** le premier organe de frottement (3) a une épaisseur axiale supérieure à une distance (21) entre le capot et l'organe de butée (2).

6. Démarreur (201) selon l'une quelconque des revendications précédentes, **caractérisé en ce que** le démarreur comprend un deuxième organe de frottement (4), ledit deuxième organe de frottement (4) comprenant une ouverture (14) et la portion (12) de l'arbre traverse cette ouverture (14), le deuxième organe de frottement (4) étant monté entre le collecteur (212) et le capot (216) et **en ce que** le capot (216) supporte le deuxième organe de frottement (4) de sorte que le deuxième organe de frottement (4) présente un deuxième jeu minimum positif (20) entre la périphérie interne de son ouverture (14) et la périphérie externe (11) de la portion (12) de l'arbre (214).

7. Démarreur (201) selon la revendication précédente quand dépendante de la revendication 2, caractérisé en ce le deuxième jeu minimum positif (20) est supérieur à la somme d'un jeu (17) entre le palier (1) et le capot (216) et d'un jeu (18) entre le palier (1) et la portion (12) de l'arbre (214).

8. Démarreur (201) selon la revendication 6 ou 7, **caractérisé en ce que** le deuxième organe de frottement (4) est fixé sur le capot (216).

9. Démarreur (201) selon l'une quelconque des revendications 6 à 8, **caractérisé en ce que** le deuxième organe de frottement (4) est centré sur le capot (216).

10. Démarreur (201) selon l'une quelconque des revendications 6 à 9, **caractérisé en ce que** le capot comprend une portion interne de support (16) s'étendant axialement à partir du côté interne (8) pour supporter le deuxième organe de frottement (4).

11. Démarreur (201) selon les revendications 9 et 10, **caractérisé en ce que** la portion interne de support (16) permet le centrage du deuxième organe de frottement (4).

12. Démarreur (201) selon l'une quelconque des revendications 5 à 11, **caractérisé en ce que** le deuxième organe de frottement (4) a une épaisseur axiale supérieure à une distance (22) entre le collecteur (212) et le capot (216).

## Patentansprüche

1. Anlasser (201), umfassend:
- einen Rotor (202), der einen Kommutator (212) und eine mit einer Achse (X) versehene Welle (214) hat,
- eine Kappe (216), die eine innere Seite (8) gegenüber dem Kommutator (212) und eine äußere Seite (9) auf der anderen Seite der inneren Seite (8) hat, wobei die Kappe (216) eine Öffnung (10) umfasst, die von der inneren Seite (8) zu der äußeren Seite (9) geht, wobei ein Abschnitt (12) der Welle (214) mittels der Öffnung (10) durch die Kappe (216) geht,
- ein Anlageglied (2), das von der äußeren Seite (9) der Kappe (216) an der Welle (214) montiert ist, und
- ein erstes Reibglied (3), das eine Öffnung (13) umfasst und zwischen dem Anlageglied (2) und der Kappe (216) montiert ist, wobei der Abschnitt der Welle (214) durch diese Öffnung (13) geht, wobei die Kappe (216) das erste Reibglied (3) stützt, so dass das erste Reibglied ein erstes positives Minimalspiel (19) zwischen dem inneren Umfang seiner Öffnung (13) und dem äußeren Umfang (11) des Abschnitts (12) der Welle (214) aufweist, **dadurch gekennzeichnet, dass** das erste Reibglied (3) auf die Kappe (216) zentriert ist, dass die Kappe (216) einen Stützabschnitt (15) umfasst, der sich axial erstreckt, um das erste Reibglied (3) zu stützen, und die Zentrierung des ersten Reibglieds (3) gestattet.

2. Anlasser nach dem vorhergehenden Anspruch, **dadurch gekennzeichnet, dass** er ein Lager (1) zwischen der Kappe (216) und dem Abschnitt (12) der Welle (214) umfasst und dass das erste positive Minimalspiel (19) größer als die Summe eines Spiels (17) zwischen dem Lager und der Kappe und eines Spiels (18) zwischen dem Lager und dem Abschnitt (12) der Welle (214) ist.

3. Anlasser (201) nach Anspruch 1 oder 2, **dadurch gekennzeichnet, dass** das erste Reibglied (3) an der Kappe (216) befestigt ist.

4. Anlasser (201) nach einem der vorhergehenden Ansprüche, **dadurch gekennzeichnet, dass** der Stützabschnitt (15) einen äußeren Umfang des ersten Reibglieds (3) zentriert.

5. Anlasser (201) nach einem der vorhergehenden Ansprüche, **dadurch gekennzeichnet, dass** das erste Reibglied (3) eine axiale Dicke hat, die größer als ein Abstand (21) zwischen der Kappe und dem Anlageglied (2) ist.

6. Anlasser (201) nach einem der vorhergehenden Ansprüche, **dadurch gekennzeichnet, dass** der Anlasser ein zweites Reibglied (4) umfasst, wobei das zweite Reibglied (4) eine Öffnung (14) umfasst und der Abschnitt (12) der Welle durch diese Öffnung (14) geht, wobei das zweite Reibglied (4) zwischen dem Kommutator (212) und der Kappe (216) montiert ist, und dass die Kappe (216) das zweite Reibglied (4) stützt, so dass das zweite Reibglied (4) ein zweites positives Minimalspiel (20) zwischen dem inneren Umfang seiner Öffnung (14) und dem äußeren Umfang (11) des Abschnitts (12) der Welle (214) aufweist.

7. Anlasser (201) nach dem vorhergehenden Anspruch, wenn er von Anspruch 2 abhängig ist, **dadurch gekennzeichnet, dass** das zweite positive Minimalspiel (20) größer als die Summe eines Spiels (17) zwischen dem Lager (1) und der Kappe (216) und eines Spiels (18) zwischen dem Lager (1) und dem Abschnitt (12) der Welle (214) ist.

8. Anlasser (201) nach Anspruch 6 oder 7, **dadurch gekennzeichnet, dass** das zweite Reibglied (4) an der Kappe (216) befestigt ist.

9. Anlasser (201) nach einem der Ansprüche 6 bis 8, **dadurch gekennzeichnet, dass** das zweite Reibglied (4) auf die Kappe (216) zentriert ist.

10. Anlasser (201) nach einem der Ansprüche 6 bis 9, **dadurch gekennzeichnet, dass** die Kappe einen inneren Stützabschnitt (16) umfasst, der sich axial von der inneren Seite (8) erstreckt, um das zweite Reibglied (4) zu stützen.

11. Anlasser (201) nach den Ansprüchen 9 und 10, **dadurch gekennzeichnet, dass** der innere Stützabschnitt (16) die Zentrierung des zweiten Reibglieds (4) gestattet.

12. Anlasser (201) nach einem der Ansprüche 5 bis 11, **dadurch gekennzeichnet, dass** das zweite Reibglied (4) eine axiale Dicke hat, die größer als ein Abstand (22) zwischen dem Kommutator (212) und der Kappe (216) ist.

## Claims

1. Starter (201) comprising:
- a rotor (202) having a commutator (212) and a shaft (214) having an axis (X);
- a cover (216) having an inner side (8) facing the commutator (212) and an outer side (9) on the other side from the inner side (8), the cover (216) comprising an opening (10) passing from the inner side (8) to the outer side (9), the opening (10) allowing a portion (12) of the shaft (214) to pass through the cover (216);
- an abutment member (2) mounted on the shaft (214) on the outer side (9) of the cover (216); and
- a first friction member (3) comprising an opening (13) and mounted between the abutment member (2) and the cover (216), the portion of the shaft (214) passing through this opening (13),
the cover (216) supporting the first friction member (3) in such a way that the first friction member has a positive first minimum clearance (19) between the inner periphery of its opening (13) and the outer periphery (11) of the portion (12) of the shaft (214), **characterized in that** the first friction member (3) is centred on the cover (216), **in that** the cover (216) comprises a support portion (15) that extends axially so as to support the first friction member (3) and that allows centring of the first friction member (3).

2. Starter according to the preceding claim, **characterized in that** it comprises a bearing (1) between the cover (216) and the portion (12) of the shaft (214), and **in that** the positive first minimum clearance (19) is greater than the sum of a clearance (17) between the bearing and the cover and a clearance (18) between the bearing and the portion (12) of the shaft (214).

3. Starter (201) according to Claim 1 or 2, **characterized in that** the first friction member (3) is secured to the cover (216).

4. Starter (201) according to any one of the preceding claims, **characterized in that** the support portion (15) centres an outer periphery of the first friction member (3).

5. Starter (201) according to any one of the preceding claims, **characterized in that** the first friction member (3) has an axial thickness greater than a distance (21) between the cover and the abutment member (2).

6. Starter (201) according to any one of the preceding claims, **characterized in that** the starter comprises a second friction member (4), said second friction member (4) comprising an opening (14) and the portion (12) of the shaft passing through this opening (14), the second friction member (4) being mounted between the commutator (212) and the cover (216) and **in that** the cover (216) supports the second friction member (4) in such a way that the second friction member (4) has a positive second minimum clearance (20) between the inner periphery of its opening (14) and the outer periphery (11) of the portion (12) of the shaft (214).

7. Starter (201) according to the preceding claim when dependent on Claim 2, **characterized in that** the positive second minimum clearance (20) is greater than the sum of a clearance (17) between the bearing (1) and the cover (216) and a clearance (18) between the bearing (1) and the portion (12) of the shaft (214) .

8. Starter (201) according to Claim 6 or 7, **characterized in that** the second friction member (4) is secured to the cover (216).

9. Starter (201) according to any one of Claims 6 to 8, **characterized in that** the second friction member (4) is centred on the cover (216).

10. Starter (201) according to any one of Claims 6 to 9, **characterized in that** the cover comprises an inner support portion (16) extending axially from the inner side (8) so as to support the second friction member (4) .

11. Starter (201) according to Claims 9 and 10, **characterized in that** the inner support portion (16) permits centring of the second friction member (4).

12. Starter (201) according to any one of Claims 5 to 11, **characterized in that** the second friction member (4) has an axial thickness greater than a distance (22) between the commutator (212) and the cover (216).
